# EUROPEAN PATENT SPECIFICATION

(11) **EP 0 596 910 B1**
(45) Date of publication and mention of the grant of the patent: **09.04.1997**
(21) Application number: 92914696.7
(22) Date of filing: 11.06.1992
(51) Int. Cl.: C22C 1/10, B32B 18/00, C04B 35/58

(54) **HARDENED CERMETS AND METHOD OF FORMING HARDENED CERMETS**
GEHÄRTETE CERMETS UND VERFAHREN ZUR HERSTELLUNG VON GEHÄRTETEN CERMETS
CERMETS DURCIS ET LEUR PROCEDE DE PREPARATION

(30) Priority: 29.07.1991 US 736991
(43) Date of publication of application: 18.05.1994
(73) Proprietor: THE DOW CHEMICAL COMPANY, Midland, Michigan 48640 (US)
(72) Inventor: PYZIK, Aleksander J., Midland, MI 48640 (US); KELTO, Clifford A., Williamsburg, MI 49690 (US); KILLMAN, Berverly J., Cedar, MI 49621 (US); OTT, Jack J., Hemlock, MI 48626 (US)
(74) Representative: Burford, Anthony Frederick
(86) International application number: US9204947
(87) International publication number: WO9303193

(56) References cited:
- EP-A- 0 250 210
- EP-A- 0 299 905
- EP-A- 0 369 931

## Description

Cermets are refractories that include at least one ceramic component and at least one metal component. The mechanical properties of cermets often depend upon the relative amounts of ceramic and metal components present. For example, metal components, such as aluminum (Al), are less hard than ceramic components, such as aluminum nitride (AlN). Therefore, a cermet including a low proportion of aluminum to aluminum nitride will be harder than a cermet including a higher proportion of aluminum to aluminum nitride. The relative hardness of a cermet is, however, inversely proportional to its resistance to damage as a result of repeated impacts.

Cermets are typically formed by substantially filling the pores of a porous ceramic compact with a molten metal. Upon cooling, the molten metal solidifies thereby forming the cermet. The relative amounts of metal and ceramic components are generally limited by the ability of the metal to fill the pores of the porous ceramic compact. If the pores are too small, molten metal often will not substantially fill the pores. Alternatively, if the pores are too large, the amount of molten metal required to fill the pores can be excessive, thereby causing the resulting cermet to lack sufficient hardness.

One attempt to form cermets that exhibit both relatively high hardness and high impact resistance employs only extremely hard ceramic components, such as titanium diboride (TiB₂) or boron carbide (B₄C). However, such ceramic components have poor resistance to repeated impact, hereinafter "multi-impact resistance", as opposed to resistance to a single impact, hereinafter "single-impact resistance".

Another attempt disposes a molten metal in a porous ceramic that has a void space greater than the volume of molten metal. Exposure to a combination of temperature and pressure sufficient to at least partially densify the porous ceramic causes a substantial portion of the pores either to collapse or to fill with molten metal. Such exposure can, however, cause significant shrinkage and deformation of the ceramic component, thereby forming a defective cermet. Also, exposure to very high temperatures and pressures can result in a variety of reaction products. Brittle reaction products significantly diminish the impact resistance of the resulting cermet. Comparatively soft reaction products similarly diminish the hardness of the resulting cermet.

Thus, a need exists for cermets and a method of forming cermets which overcome or minimize the above-mentioned problems.

EP-A-0299905 discloses a method for producing a self-supporting body by reactive infiltration of a molten parent metal or alloy into a mass of boron carbide and, optionally, an inert filler material. The product comprises one or more of a parent metal carbide, a metal and voids and these phases may or may not be interconnected in one or more dimensions. When aluminum is the parent metal, the product may comprise an aluminum boro carbide, aluminum and other unreacted or unoxidized constituents of aluminum. The filler may comprise ceramic and/or metal and the preferred filler is alumina. In the exemplified processes using aluminum, reactive infiltration of boron carbide was conducted at 1200°C.

One aspect of the present invention is a process for forming a hardened cermet, comprising the steps of:
a) providing a porous ceramic compact including boron carbide and a second ceramic component;
b) at least partially filling pores of the porous ceramic compact with a molten metal component selected from aluminum or an aluminum-based alloy to form a metal-filled ceramic compact;
c) exposing the metal-filled ceramic compact to a temperature of 600°C to 1000°C for a sufficient time period to cause at least a portion of the boron carbide to react with at least a portion of the molten metal component and form a cermet-hardening component, the second ceramic component undergoing no significant reaction with the molten metal at said temperature, the temperature conditions of step c) being different from those of step b); and
d) cooling the metal-filled ceramic compact and cermet-hardening component to a temperature that allows any remainder of the molten metal component to solidify, thereby forming a hardened cermet.

A second aspect of the present invention is a process for forming a hardened cermet that comprises:
a) providing a layered assembly having a first porous ceramic layer and at least one additional porous ceramic layer, the first and additional layers including a boron carbide and a second ceramic component, each layer within said layered assembly having a ratio of boron carbide to the second ceramic component that differs from the ratio within each adjacent layer;
b) at least partially filling pores within each layer with a molten metal component selected from aluminum or an aluminum-based alloy to form a metal-filled layered assembly;
c) exposing the assembly to a temperature of 600°C to 1000°C for a time period sufficient to cause at least a portion of the boron carbide in each layer to react with at least a portion of the metal component contained therein to form a cermet-hardening component, the second ceramic component undergoing no significant reaction with the molten metal at said temperature, the temperature conditions of step c) being different from those of step b) ; and
d) cooling the assembly resulting from step (c) to a temperature that allows any remaining molten metal to solidify, thereby forming a hardened cermet laminate.

This invention has many advantages. Hardened cermets can be formed that are relatively hard, as a consequence of forming the cermet-hardening component, and have relatively high multi-impact resistance, because of residual metal component. The amount of relatively hard, expensive ceramic components needed to form correspondingly hard cermets can also be significantly reduced. In addition, the hardness and impact resistance of the resulting cermet can be controlled by limiting the extent of reaction between molten metal and the boron carbide in a metal-filled ceramic. Further, hardened-cermet-laminates that have distinct layers of varying physical properties or thicknesses can be formed.

Figure 1 is a perspective view of a porous ceramic assembly on which an amount of metal powder is disposed prior to infiltration to form a metal-filled ceramic assembly.

Figure 2 is a perspective view of the metal-filled ceramic assembly prior to formation of a cermet-hardening component.

Figure 3 is a hardened cermet laminate formed from the metal-filled ceramic assembly illustrated in Figure 2 and having layers of progressively differing hardness and impact resistance.

The features and other details of the present invention are more particularly described with reference to the accompanying drawings and pointed out in the claims. The same number present in different figures represents the same item. The particular embodiments of the invention shown in the drawings illustrate the invention.

Hardened cermets of the present invention are formed from a metal component and a porous ceramic compact that includes at least boron carbide and a second ceramic component. The metal component reacts with at least boron carbide, to form a cermet-hardening component. Exposure times for metal-filled ceramic compacts of 1 to 50 hours, preferably 20 to 30 hours, and temperatures within a range of 600 to 1000°C produce satisfactory results.

At least one of the ceramic components, designated a second, or relatively nonreactive, ceramic component, yields little, if any, reaction product. The temperature is maintained for a period of time sufficient to produce a desired amount of the cermet hardening component.

Preferably, the second ceramic component includes titanium diboride (TiB₂). In this case, the period of time for step (c) ranges from one hour to 100 hours. The period of time preferably ranges from 20 to 50, most preferably 25 to 40, hours. The respective melting points for aluminum, boron carbide and titanium diboride are 660.37°C, 2350°C and 2900°C. Although the reaction starts at about 450°C, significant amounts of new phases do not appear at temperatures below 600°C.

The second ceramic component may be boron carbide that is heat treated to reduce its reactivity with aluminum. The boron carbide heat treatment occurs at a temperature in excess of 1600°C, preferably above 1800°C, but less than 2350°C. Heat treatment times of from 30 minutes to 5 hours produce satisfactory results.

When the metal component is aluminum, the first and second components may both be boron carbide if one condition is met. That condition is that the first component must be fine, or less than 5 micrometers average particle diameter, and the second component must be large, or greater than 45 micrometers average particle diameter. Reaction times of 2-20 hours at temperatures within a range of 600 to 1000°C produce satisfactory results.

Other examples of second ceramic components include: aluminum nitride (AlN) (sublimes at 2000°C) and aluminum oxide (Al₂O₃) (m.pt. 2072°C).

In one embodiment of the invention, a porous ceramic compact is formed by a conventional method. For example, the boron carbide and the second ceramic component are combined as a powder mixture. The powder mixture is then mixed with water, a suitable binder, and a dispersant or lubricant, or both, to form a wet mixture. The wet mixture is formed into a suitable porous ceramic compact by a conventional method, such as slip casting, centrifugal casting or injection molding. The porous ceramic compact can be in the form of ceramic greenware. The porous compact can also be partially densified by a suitable method, such as sintering, hot pressing or hot isostatic pressing. The porous ceramic compact can have many different shades, including cylinders, discs, cones, spheres, cubes. The shape can also approximate that of the hardened cermet to be formed.

Conventional methods suitably result in pores of the porous ceramic compact being substantially filled with the metal component. The volume of the pores is preferably in a range of from five to fifty percent by volume, based upon total volume of the porous ceramic. In a particularly preferred embodiment, an average pore diameter is between 0.5 and five micrometers.

The relative amounts of boron carbide and second ceramic components affect the amount of cermet-hardening component formed in accordance with the present invention. When the metal is aluminum and the second ceramic component is titanium diboride, a desirable volumetric ratio of boron carbide to titanium diboride is within a range of between 90:10 and 10:90. The range is preferably between 90:10 and 60:40, most preferably between 80:20 and 70:30.

The amount of metal component is preferably sufficient to at least partially fill the pores of the porous ceramic compact and react with the first ceramic component i.e. boron carbide to form an amount of cermet-hardening component sufficient to significantly harden the resulting cermet. The term "significantly harden" means an increase in hardness, in comparison to the same cermet without a hardening component, of at least 15%, preferably at least 25%. Preferably, the amount is within a range of between five and fifty percent of the volume of the porous ceramic compact. A more preferred range for partially filled compacts is from 5 to 10 volume percent. A more preferred range for preparing compacts that are near theoretical density is from 20 to 50 volume percent.

Conventional means are used to at least partially fill pores of the porous ceramic compact with molten metal component to form a metal-filled ceramic. For example, the metal component is combined, as a metal powder, with the ceramic powder mixture during formation of the porous ceramic compact or porous greenware. The greenware is then exposed to sufficient temperature and pressure for a sufficient time period to cause the metal component to become molten and at least partially fill the pores of the porous ceramic greenware. An example of a suitable method of exposing the porous ceramic greenware to pressure is rapid omnidirectional compaction. When aluminum is the metal component and titanium diboride is the second ceramic component, desirable rapid omnidirectional compaction conditions include a temperature within a range of from 660°C to 1,200°C, a pressure within a range of from 1 MPa to 850 MPa, and a time at pressure within a range of from five seconds to one hour. The temperature range is preferably 700 to 1000°C, most preferably 700 to 900°C. The pressure range is preferably 180 to 850 MPa, most preferably 800 to 830 MPa. The time is preferably 30 seconds to ten minutes, most preferably 30 to 90 seconds.

Alternatively, molten metal can substantially fill the pores of the porous ceramic compact by vacuum or pressure infiltration. The porous ceramic compact is preferably exposed to a temperature within a range of from 1,600°C to 2,250°C for a period of time within a range of from thirty to sixty minutes before infiltration. The metal component is placed in contact with the porous compact, desirably on its top or bottom surface. The metal component and the porous compact are then exposed to conditions of temperature and pressure sufficient to melt the metal component and cause it to flow into, and at least partially fill, the pores of the porous compact. Gravitational force, capillary attraction, or applied pressure can assist infiltration.

In a preferred embodiment, including aluminum, boron carbide and titanium diboride, the porous ceramic compact and the aluminum are heated to an infiltration temperature within a range of from 1,100°C to 1,200°C. During infiltration, the porous ceramic compact and the molten aluminum are subjected to a reduced pressure or vacuum within a range of from 10 to 300 millitorrs (1.3 to 40 pascals). In some embodiments, the atmosphere includes an inert gas such as argon.

The metal-filled or infiltrated ceramic is then exposed to 600°C to 1000°C for a sufficient time period to cause at least a portion of the first ceramic component to react with at least a portion of the molten metal component to form the cermet-hardening component. The temperature is desirably within a range of from 700 to 1000°C. The time period is desirably within a range of from 0.5 to 50 hours, preferably 30 to 50 hours.

The metal-filled ceramic can, however, be cooled to a temperature that allows the metal to solidify and thereby form a cermet before exposing the cermet to conditions sufficient to form the cermet-hardening component.

Although the mechanism of the invention is not completely understood, it is believed that the cermet-hardening component is significantly harder than the unreacted combination of the metal component and the boron carbide. It is also believed that the presence of the second ceramic component interferes with, and slows the rate of, reaction between the metal and boron carbide. An added degree of control over the reaction is thus provided by the presence of the second ceramic component.

When the metal-filled ceramic is an aluminum-filled ceramic that includes boron carbide and titanium diboride, it is heat-treated by exposure to a temperature within a range of from 600°C to 1,000°C for a period of time within a range of from one to fifty hours. Heat treatment preferably occurs in an inert gas atmosphere at a pressure within a range of from one to ten atmospheres (0.10 to 1.01 MPa). The heat treatment conditions are sufficient to cause a reaction between boron carbide and molten aluminum.

Boron carbide and molten aluminum react at temperatures within a range of from 600°C to 1,000°C to form AlB₂ and Al₄BC. Solidification of the AlB₂ and Al₄BC causes the resulting cermet to be significantly harder than a cermet including only aluminum and boron carbide or only aluminum and titanium diboride. By way of illustration, cermets that contain 30 volume % aluminum and 70 volume % of either boron carbide or titanium diboride but no hardening component have a hardness within a range of 200 to 450 kg/mm². After heat treatment to form the hardening component, the hardness increases to a value within a range of 800 to 1400 kg/mm². Al₄BC, while significantly harder than AlB₂, can decompose to form AlB₂, a more stable compound. It is believed that the presence of the second ceramic component in the porous ceramic compact slows both the reaction between the aluminum and B₄C to form AlB₂ and Al₄BC and the decomposition of Al₄BC to AlB₂.

The metal-filled ceramic and the cermet hardening component contained therein are then cooled to a temperature that stops the reaction and allows any remaining molten metal to solidify. The presence of the cermet-hardening component converts the cermet to a hardened cermet.

The amount of remaining molten metal is preferably sufficient to prevent the hardened cermet's multi-impact resistance from being significantly less than that of a cermet formed without any significant reaction between the molten metal component and the first ceramic component. In a particularly preferred embodiment, the amount of metal component in the hardened cermet is within a range of from 3 to 30% by weight of the hardened cermet. A still more preferred range is 5 to 15% by weight.

Hardened cermets formed by the method of the invention can be employed to form hardened-cermet laminates. The hardened-cermet laminates can include cermet layers having various ceramic components and varying amounts of common ceramic components.

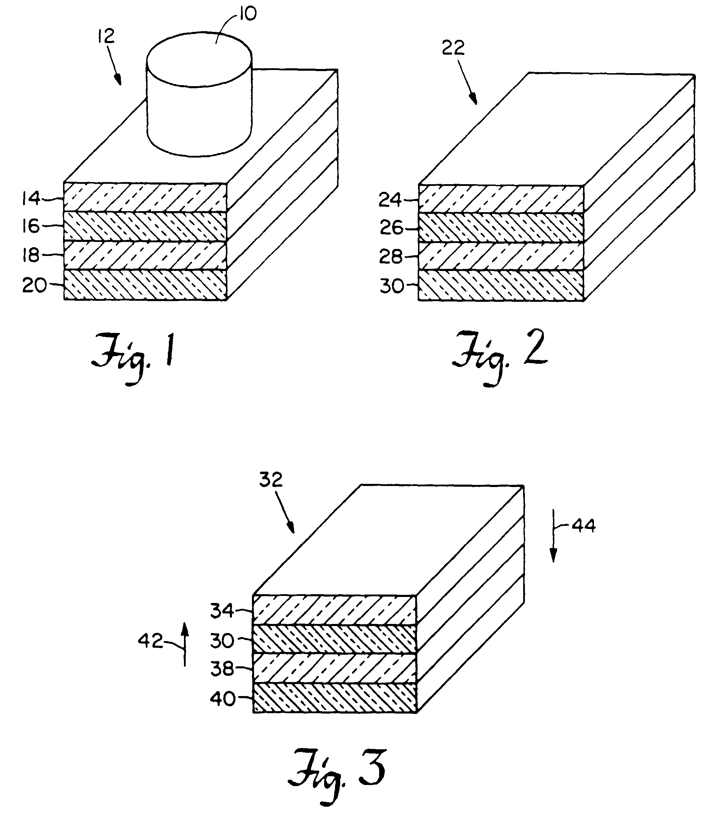

In one illustration, a hardened-cermet laminate is formed by disposing aluminum disc 10 on porous ceramic assembly 12, as shown in Figure 1. The volume of disc 10 is sufficient to at least partially fill the pores of assembly 12. Assembly 12 includes vertically stacked, partially densified, porous ceramic layers 14, 16, 18 and 20. The amount of void space in each porous ceramic layer is preferably within a range of from fifteen to forty percent of the total volume of the porous ceramic layer. Layers 14, 16, 18 and 20 are bonded together by densifying the layers as a stacked assembly of greenware layers. Layers 14, 16, 18 and 20 can, however, be ceramic greenware rather than partially densified. The greenware layers are bonded together during formation of the hardened-cermet laminate.

Boron carbide is present, as a first ceramic component, in porous ceramic layers 14, 16, 18 and 20 in the respective amounts of seventy, eighty, ninety and one hundred percent, by volume, of the total volume of the ceramic components. The balance of the ceramic in each porous ceramic layer is titanium diboride, as a second ceramic component.

Aluminum disc 10 and porous ceramic assembly 12 are disposed in a suitable furnace, such as a graphite vacuum furnace, and exposed to an atmosphere and temperature sufficient to cause aluminum disc 10 to melt, infiltrate and at least partially fill the pores of porous ceramic assembly 12. Preferably, a vacuum is present in the furnace at a reduced pressure within a range of from ten to three hundred millitorrs (1.3 to 40 Pascals). Also, the temperature is preferably maintained within a range of from 1,150 to 1,200°C for a time of from 30 minutes to 2 hours during infiltration.

Infiltration of porous ceramic assembly 12 by molten aluminum causes formation of metal-filled ceramic assembly 22, including metal-filled ceramic layers 24, 26, 28 and 30, as shown in Figure 2. Assembly 22 is then exposed to a sufficient temperature for a sufficient time period to cause at least a portion of the boron carbide in layers 24, 26, 28 and 30 to react with at least a portion of the molten aluminum and form a cermet-hardening component. In this embodiment, the cermet-hardening component includes a combination of Al₄BC and AlB₂. Satisfactory results are obtained with a temperature within a range of 700 to 900°C and a time within a range of 30 to 50 hours.

The amount of Al₄BC present in each of metal-filled ceramic layers 24, 26, 28 and 30, relative to the amount of AlB₂, depends, at least in part, upon the relative amount of second ceramic component, in this case titanium diboride, present in each layer. For example, the proportion of Al₄BC to AlB₂ is highest in layer 24. Layer 24 has the greatest amount of titanium diboride relative to layers 26, 28 and 30. Similarly, layer 26 includes a greater ratio of Al₄BC to AlB₂ than layers 28 and 30, and layer 28 includes a greater ratio of Al₄BC to AlB₂ than layer 30. Thus, a discreet gradation of the ratio of Al₄BC to AlB₂, is distributed in assembly 22 from layer 24 to layer 30.

Assembly 22 and the cermet-hardening component contained therein are then cooled to a temperature that allows the remainder of the molten aluminum to solidify, thereby forming hardened-cermet laminate 32 shown in Figure 3. A suitable cooling rate is 2 to 5°C per minute to room temperature. Laminate 32 includes hardened-cermet layers 34, 36, 38 and 40. Layers 34, 36, 38 and 40 are bonded together by aluminum that has solidified between the cermet layers.

The amount of cermet-hardening component formed, relative to the amount of the combined first and second ceramic components present, is highest in layer 40. Conversely, the relative amount of cermet-hardening component is lowest in layer 34. However, because the decomposition of Al₄BC to AlB₂ is significantly diminished in layer 34, by comparison to layer 40, and because Al₄BC is significantly harder than AlB₂, layer 34 has substantially the same hardness as layer 40. Similarly, layer 36 and layer 38 have substantially the same hardness as layer 40.

The amount of the second ceramic component, titanium diboride, diminishes in amount from layer 34 to layer 40. It appears that the reaction of aluminum and B₄C to form the cermet-hardening component varies in direct relation to the relative amount of the second ceramic component present in a layer. Therefore, the amount of unreacted metal component, aluminum, relative to the combined amount of unreacted first and second components present, is highest in layer 34 and diminishes from layer 34 to layer 40. The multi-impact resistance of each layer is directly proportional to the relative amount of metal component present in each layer. Consequently, layer 34 has the greatest multi-impact resistance of the layers in laminate 32. Also, laminate 32 exhibits a gradient of increasing multi-impact resistance from layer 40 to layer 34, as indicated by arrow 42.

Conversely, the single-impact resistance is directly proportional to the ratio of the combined amount of the unreacted ceramic components to the unreacted metal component. Therefore, the single-impact resistance of laminate 32 is greatest at layer 40. Also, laminate 32 exhibits a gradient of increasing impact resistance from layer 34 to layer 40, as indicated by arrow 44.

Alternative, hardened cermet laminates that include arrangements of hardened cermet layers other than that described in Figures 1 through 3 can be formed. For example, the hardened cermet layers can alternate between relatively hard and relatively impact resistant hardened cermets. Also, the relative thickness of the hardened cermet layers can vary.

The invention will now be further and more specifically described by the following examples. All parts and percentages are by weight unless otherwise stated.

### Example I

Seven pairs of porous ceramic greenware discs were formed from compositions that included boron carbide (B₄C) and titanium diboride (TiB₂) as ceramic components. Each pair of greenware discs included different relative amounts of the two ceramic components. The volumetric ratio of boron carbide to titanium diboride in the seven pairs of greenware discs were as follows: 1:0; 9:1; 7:3; 1:1; 3:7; 1:9; and 0:1. The discs had a diameter of three inches (7.6 cm) and a thickness of 0.5 inches (1.3 cm). The discs had an average theoretical density within a range of from 62 to 64 percent.

The discs were each placed in a refractory crucible formed of graphite so that a flat upper side of the disc was substantially level. The refractory crucibles, within which the discs were disposed, were placed in a graphite-element furnace. Two hundred grams of 1145 grade aluminum powder, commercially available from Alcoa, Inc., were disposed on the level surface of each disc.

The furnace was then sealed and vacuum-purged three times and then filled with an argon gas that included five percent hydrogen by volume. The pressure of the furnace was then reduced to 150 millitorrs (20 Pa) and the temperature in the furnace was raised at a rate of 20°C per minute to a temperature of 1180°C. The temperature in the furnace was maintained at 1180°C for one-half hour to allow the aluminum to substantially infiltrate the pores of the discs, thereby forming metal-filled ceramic discs. The metal-filled ceramic discs were subsequently allowed to cool at a rate of about 10°C per minute to a temperature of 100°C. The aluminum in the metal-filled ceramic discs solidified to cause the metal-filled discs to form cermet discs. One cermet disc of each pair was then removed from the furnace and labeled as a control disc.

The furnace was filled with argon gas, the pressure was increased to one atmosphere (1.01 x 10⁵ Pa) and the temperature of the furnace, including the cermet discs remaining in the furnace, was raised at a rate of 20°C per minute to a temperature of 900°C. The temperature in the furnace was maintained at 900°C for twenty hours to form a cermet-hardening component. The cermet discs were subsequently allowed to cool at a rate of 10°C per minute to a temperature of 20°C to thereby form hardened cermet discs.

The control discs and the hardened cermet discs were tested for hardness. The hardness test was a Vicker's hardness test, using a thirty pound (13.6 Kg) load. The results of hardness testing are listed below in Table I:

**Table I**

| Ceramic Content (by volume) | | Hardness (Kg/mm²) | |
|---|---|---|---|
| Boron carbide | Titanium diboride | Control | Hardened |
| 100 | 0 | 895 | 1384 |
| 90 | 10 | 790 | 1415 |
| 70 | 30 | 640 | 1375 |
| 50 | 50 | 568 | 1072 |
| 30 | 70 | 503 | 766 |
| 10 | 90 | 358 | 413 |
| 0 | 100 | 214 | 229 |

As can be seen in Table I, the hardness of the control discs, with no post-infiltration heat treatment, diminished significantly as the ratio of boron carbide to titanium boride present in the discs decreased from 100:0 to 70:30. In contrast, there was no significant loss of hardness over the same decrease of relative boron carbide content in the hardened cermets. Also, as the ratio of boron carbide to titanium diboride decreased to 70:30, the difference in hardness between the control discs and the corresponding hardened cermet discs increased. Therefore, as the proportion of titanium diboride increased up to about thirty percent of the greenware ceramic discs, by volume, the percentage increase of hardness achieved was improved by exposing the cermet discs to a post-infiltration heat-treatment according to the method of the invention.

### Example II

Four sets of porous ceramic greenware discs were formed with boron carbide (B₄C) and titanium diboride (TiB₂) as ceramic components. Each set of greenware discs included five discs having the same proportion of boron carbide to titanium diboride. The ratio of boron carbide to titanium diboride of the four sets of greenware discs were as follows: 1:0; 9:1; 8:2; and 7:3. The greenware discs had the same dimensions and theoretical density as the greenware discs of Example I.

The discs were disposed in a refractory crucible that was placed in the furnace described in Example I. The furnace was vacuum-purged three times, as described in Example I, and then filled with argon gas under atmospheric pressure. The temperature in the furnace was raised at a rate of 20°C per minute to a temperature of 2250°C and maintained at that temperature for about forty minutes to partially densify the greenware discs. The temperature in the furnace was then lowered at rate of about 20°C per minute to a temperature of 20°C. The resulting partially densified greenware discs had a theoretical density within a range of from seventy-five to seventy-seven percent.

About 200 g of 1145 grade aluminum powder, commercially available from Alcoa, Inc., were disposed on a flat surface of each partially densified disc. The furnace was purged three times, as in Example I, and the pressure within the furnace was set at about 125 millitorr (16.7 Pa). The temperature in the furnace was then raised, as in Example I, to 1180°C and maintained at that temperature for one-half hour to allow the aluminum to infiltrate and substantially fill the partially densified discs, thereby forming metal-filled discs. The furnace was then cooled, at as in Example I, to a temperature of 20°C.

One metal-filled disc of each set was then immediately removed from the furnace and labeled as a control disc. The remaining discs were exposed to a heat-treatment temperature of 900°C in the furnace to allow a cermet-hardening component to form. A metal-filled disc of each set was subsequently removed from the furnace after eight, fifteen, twenty and fifty hours of exposure to the heat-treatment temperature of 900°C in the furnace. Metal-filled discs removed from the furnace were cooled at a rate of about 20°C per minute to form hardened cermets.

The hardness of all resulting discs was determined by the Vicker's hardness test, as described in Example I. The test results are shown below in Table II:

**Table II**

| Ceramic Content (by volume) | | | Hardness (Kg/mm²) | | | | |
|---|---|---|---|---|---|---|---|
| Boron Carbide | Titanium Diboride | Time (h) | Ctrl | 8 | 15* | 20 | 50 |
| 100 | 0 | | 807 | 822 | - | 787 | 814 |
| 90 | 10 | | 914 | 920 | - | 1431 | 1431 |
| 80 | 20 | | 897 | 931 | 940 | 1381 | 1529 |
| 70 | 30 | | 950 | 1075 | 1485 | 1489 | 1599 |

| | | | | | | | |
|---|---|---|---|---|---|---|---|
| * - means not measured | | | | | | | |

As can be seen in Table II, all of the partially densified discs that included titanium diboride were hardened by exposure to heat-treatment following infiltration. In contrast, the partially densified control discs, which did not include titanium diboride, were not significantly hardened under the same conditions. Therefore, the presence of titanium diboride allowed a significant increase in hardness of the resulting cermets.

### Example III

A set of six porous ceramic greenware discs was formed that included only boron carbide as a ceramic component. Another set of six porous ceramic greenware discs was formed that included sixty percent boron carbide and forty percent of titanium diboride, both percentages based on volume of ceramic. The greenware discs had the same dimensions and range of theoretical densities as the greenware discs described in Examples I and II.

The greenware discs were disposed in a furnace and infiltrated with aluminum to form metal-filled ceramic discs, as described in Example I. The temperature of the furnace was then lowered from 1180°C to 925°C. One metal-filled disc from each set was then removed from the furnace and labeled as a control disc. The remaining metal-filled ceramic discs were maintained at a temperature of 925°C in the furnace to form a cermet-hardening component. An additional metal-filled disc was removed at five, eight, fifteen, twenty and fifty hours after lowering the furnace temperature to 925°C. The temperature of discs removed from the furnace was lowered, as described in Example I, to allow the remaining, unreacted aluminum to solidify, thereby forming cermet discs.

The hardness of the cermet discs was determined using the Vicker's hardness test, as described in Example I. The test results are shown below in Table III:

**Table III**

| Ceramic Content (% volume) | | | Hardness (Kg/mm²) | | | | | |
|---|---|---|---|---|---|---|---|---|
| B₄C | TiB₂ | Time (h) | 0 | 5 | 8 | 15 | 20 | 50 |
| 100 | 0 | | 1175 | 1334 | 1387 | 1384 | 1386 | 1260 |
| 60 | 40 | | 848 | 959 | 1148 | 1280 | 1304 | 1384 |

As can be seen in Table III, the hardness of the cermet disc, that included only boron carbide as the ceramic component and that was exposed to post-infiltration heat treatment for fifty hours, was less hard than other cermet discs of the same set that were exposed to the same heat treatment for between about five and twenty hours. In contrast, the cermet disc, that included titanium diboride as a second ceramic component and was exposed to post-infiltration heat treatment for fifty hours, was significantly harder than other cermet discs of the same set that were exposed to the heat treatment for shorter time periods. Also, the cermet disc, that included titanium diboride and was exposed to the heat treatment for fifty hours, was significantly harder than the corresponding cermet disc that included only boron carbide.

Therefore, the presence of titanium diboride, as a second ceramic component, prevented the reduction of hardness during prolonged post-infiltration heat treatment that was observed in a cermet that included only boron carbide. Also, the presence of titanium diboride in admixture with boron carbide allowed formation of a hardened cermet that was significantly harder than a cermet exposed to the same conditions but lacking the second ceramic component.

### Example IV

Boron carbide powder (ESK specification 1500, manufactured by Elektroschemeltzwerk Kempten, and having an average particulate size of 3 micrometers) was divided into two portions. One portion was used as received. The other portion was heat treated under argon in a graphite crucible at a temperature of 1800°C for a period of 2 hours. The heat treated powder, after cooling to ambient temperature, was subjected to attrition milling for 2 hours. The milled powder was mixed with the as received portion in water (pH 7). The combined powders were converted to greenware discs and infiltrated as in Example I. The infiltrated discs were heat treated, as in Example I, but at a temperature of 800°C for 10 hours. Results of Vicker's hardness testing, as in Example I, are shown in Table IV.

**Table IV**

| Ceramic Content (by volume) | | Hardness (Kg/mm²) |
|---|---|---|
| Untreated Boron Carbide | Heat Treated Boron Carbide | |
| 100 | 0 | 1400 |
| 80 | 20 | 1120 |
| 50 | 50 | 1045 |
| 20 | 80 | 725 |
| 0 | 100 | 495 |

The data presented in Table IV show that heat-treated boron carbide can be used as a second, or non-reactive, ceramic component in accordance with the present invention.

Those skilled in the art will recognize, or be able to ascertain using no more than routine experimentation, many equivalents to the specific embodiments of the invention described herein.

## Claims

1. A process of forming a hardened cermet, comprising the steps of:
a) providing a porous ceramic compact including boron carbide and a second ceramic component;
b) at least partially filling pores of the porous ceramic compact with a molten metal component selected from aluminum or an aluminum-based alloy to form a metal-filled ceramic compact;
c) exposing the metal-filled ceramic compact to a temperature of 600°C to 1000°C for a sufficient time period to cause at least a portion of the boron carbide to react with at least a portion of the metal component and form a cermet-hardening component, the second ceramic component undergoing no significant reaction with the molten metal at said temperature, the temperature conditions of step c) being different from those of step b); and
d) cooling the metal-filled ceramic compact and cermet-hardening component to room temperature, thereby forming a hardened cermet.

2. A process as claimed in Claim 1, wherein the second ceramic component is boron carbide that has been heat-treated at a temperature greater than 1800°C but less than 2350°C or titanium diboride.

3. A process as claimed in Claim 1 or Claim 2, wherein step (b) is accomplished by vacuum infiltration.

4. A process as claimed in Claim 3, wherein the metal component is aluminum, the first ceramic component is boron carbide, the second ceramic component is titanium dioxide and the vacuum infiltration is at a temperature within a range of from 1,100°C to 1,200°C and a reduced pressure of from 1.3 to 40 pascal (10 to 300 millitorr).

5. A process as claimed in Claim 1 or Claim 2, wherein step (b) is accomplished by rapid omnidirectional compaction.

6. A process as claimed in Claim 5, wherein the metal component is aluminum, the first ceramic component is boron carbide, the second ceramic component is titanium diboride and the omnidirectional compaction conditions include a temperature within a range of from 660°C to 1,200°C, a pressure within a range of from 1 MPa to 850 MPa, and a time at pressure within a range of from five seconds to one hour.

7. A process as claimed in any one of the preceding claims, wherein step (c) is conducted in an inert atmosphere at a pressure within a range of from 0.10 to 1.01 MPa (1 to 10 Atmosphere).

8. A process as claimed in any one of the preceding claims, wherein the cermet-hardening component comprises AlB₂ and Al₄BC.

9. A process as claimed in any one of the preceding claims, wherein the metal component is aluminum, the second ceramic component is titanium diboride, and the volumetric ratio of boron carbide to titanium diboride is 90:10 to 60:40.

10. A process as claimed in Claim 9, wherein said volumetric ratio is 80:20 tc 70:30.

11. A process as claimed in any one of the preceding claims, wherein the amount of the metal component is 5 to 50 percent of the volume of the porous ceramic compact.

12. A process as claimed in Claim 11, wherein said amount of the metal is 20 to 50 volume percent.

13. A process as claimed in any one of the preceding claims, wherein the amount of the metal component remaining in the hardened cermet is 3 to 30% by weight of the hardened cermet.

14. A process as claimed in Claim 13, wherein said amount of remaining metal in the hardened cermet is 5 to 15% by weight.

15. A process as claimed in any one of the preceding claims, wherein the porous ceramic compact is a layered assembly in which each layer within said layered assembly has a ratio of boron carbide to the second ceramic component that differs from the ratio within each adjacent layer; and the pores within each layer are at least partially filled with the molten metal component to form a metal-filled layered assembly whereby a hardened cermet laminate is formed.

16. A hardened cermet obtainable by a process as defined in Claim 1.

17. A hardened cermet as claimed in Claim 16, wherein said process is as defined in any one of Claims 2 to 15.

18. A hardened cermet laminate as claimed in Claim 16 comprising a first hardened cermet layer and at least one additional hardened cermet layer, the first layer containing boron carbide, a metal component selected from aluminum or an aluminum-based alloy, at least one product of a reaction between the boron carbide and the metal component and, optionally, a second ceramic component, each additional layer containing the boron carbide, the second ceramic component, the metal component and the reaction product, each layer within said laminate having an amount of reaction product and a ratio of boron carbide to second ceramic component that differs from those of adjacent layers.

19. A hardened cermet as claimed in Claim 18, wherein the first layer has a boron carbide content of 100 percent by volume, based upon total volume of the ceramic components, and five additional layers have respective ratios of boron carbide to second ceramic component of 90:10, 70:30, 50:50, 30:70 and 10:90.

20. A hardened cermet as claimed in Claim 18 or Claim 19, wherein the second ceramic component is titanium diboride.

## Patentansprüche

1. Verfahren zum Bilden eines gehärteten Cermets, umfassend die Schritte:
a) Bereitstellen eines porösen Keramikpreßlings, umfassend Borcarbid und eine zweite Keramikkomponente,
b) mindestens teilweises Füllen von Poren des porösen Keramikpreßlings mit einer geschmolzenen Metallkomponente, ausgewählt aus Aluminium oder einer Legierung auf Aluminiumbasis, um einen Metall-gefüllten Keramikpreßling zu bilden,
c) Erwärmen des Metall-gefüllten Keramikpreßlings auf eine Temperatur von 600 °C bis 1000 °C für einen ausreichenden Zeitraum, um eine Reaktion von mindestens einem Teil des Borcarbids mit mindestens einem Teil der Metallkomponente und die Bildung einer Cermet-Härtungskomponente zu verursachen, wobei die zweite Keramikkomponente bei der Temperatur keine wesentliche Reaktion mit dem geschmolzenen Metall eingeht und die Temperaturbedingungen von Schritt c) unterschiedlich zu denen von Schritt b) sind und
d) Abkühlen des Metall-gefüllten Keramikpreßlings und der Cermet-Härtungskomponente auf Raumtemperatur, wobei ein gehärtetes Cermet gebildet wird.

2. Verfahren nach Anspruch 1, wobei die zweite Keramikkomponente Borcarbid, welches bei einer Temperatur von mehr als 1800 °C aber weniger als 2350 °C wärmebehandelt wurde oder Titandiborid ist.

3. Verfahren nach Anspruch 1 oder 2, wobei Schritt b) durch Vakuuminfiltration bewerkstelligt wird.

4. Verfahren nach Anspruch 3, wobei die Metallkomponente Aluminium ist, die erste Keramikkomponente Borcarbid ist, die zweite Keramikkomponente Titandioxid ist und die Vakuuminfiltration bei einer Temperatur in einem Bereich von 1100 °C bis 1200 °C und einem Unterdruck von 1,3 bis 40 Pascal (10 bis 300 Millitorr) stattfindet.

5. Verfahren nach Anspruch 1 oder Anspruch 2, wobei Schritt b) durch ungerichtete Schnellverdichtung bewerkstelligt wird.

6. Verfahren nach Anspruch 5, wobei die Metallkomponente Aluminium ist, die erste Keramikkomponente Borcarbid ist, die zweite Keramikkomponente Titandiborid ist und die Bedingungen für die ungerichtete Schnellverdichtung eine Temperatur in einem Bereich von 660 °C bis 1200 °C, einen Druck in einem Bereich von 1 MPa bis 850 MPa und eine Verweilzeit unter Druck in einem Bereich von 5 Sekunden bis 1 Stunde umfassen.

7. Verfahren nach einem der vorhergehenden Ansprüche, wobei Schritt c) in einer Inertatmosphäre bei einem Druck in einem Bereich von 0,10 bis 1,01 MPa (1 bis 10 Atmosphären) durchgeführt wird.

8. Verfahren nach einem der vorhergehenden Ansprüche, wobei die Cermet-Härtungskomponente AlB₂ und Al₄BC umfaßt.

9. Verfahren nach einem der vorhergehenden Ansprüche, wobei die Metallkomponente Aluminium ist, die zweite Keramikkomponente Titandiborid ist und das Volumenverhältnis von Borcarbid zu Titandiborid 90:10 bis 60:40 beträgt.

10. Verfahren nach Anspruch 9, wobei das Volumenverhältnis 80:20 bis 70:30 beträgt.

11. Verfahren nach einem der vorhergehenden Ansprüche, wobei die Menge der Metallkomponente 5 bis 50 Prozent des Volumens des porösen Keramikpreßlings ist.

12. Verfahren nach Anspruch 11, wobei die Menge des Metalls 20 bis 50 Volumenprozent ist.

13. Verfahren nach einem der vorhergehenden Ansprüche, wobei die Menge der im gehärteten Cermet verbleibenden Metallkomponente von 3 bis 30 Gewichtsprozent des gehärteten Cermets beträgt.

14. Verfahren nach Anspruch 13, wobei die Menge des im gehärteten Cermet verbleibenden Metalles von 5 bis 15 Gewichtsprozent beträgt.

15. Verfahren nach einem der vorhergehenden Ansprüche, wobei der poröse Keramikpreßling eine Schichtenanordnung ist, worin jede Schicht innerhalb der Schichtenanordnung ein Verhältnis von Borcarbid zu der zweiten Keramikkomponente aufweist, welches sich von dem Verhältnis innerhalb jeder angrenzenden Schicht unterscheidet und die Poren innerhalb jeder Schicht mindestens teilweise mit der geschmolzenen Metallkomponente gefüllt sind, um eine Metall-gefüllte Schichtenanordnung zu bilden, wodurch ein gehärtetes Cermet-Laminat gebildet wird.

16. Gehärtetes Cermet, erhältlich durch ein Verfahren nach Anspruch 1.

17. Gehärtetes Cermet nach Anspruch 16, wobei das Verfahren wie in einem der Ansprüche 2 bis 15 definiert ist.

18. Gehärtetes Cermet-Laminat nach Anspruch 16, umfassend eine erste gehärtete Cermetschicht und mindestens eine zusätzliche gehärtete Cermetschicht, wobei die erste Schicht Borcarbid, eine Metallkomponente, ausgewählt aus Aluminium oder einer Legierung auf Aluminiumbasis, mindestens ein Produkt einer Reaktion zwischen dem Borcarbid und der Metallkomponente und gegebenenfalls eine zweite Keramikkomponente enthält, wobei jede zusätzliche Schicht das Borcarbid, die zweite Keramikkomponente, die Metallkomponente und das Reaktionsprodukt enthält, wobei jede Schicht in dem Laminat eine Menge von Reaktionsprodukt und ein Verhältnis von Borcarbid zu zweiter Keramikkomponente aufweist, die sich von denen angrenzender Schichten unterscheiden.

19. Gehärtetes Cermet nach Anspruch 18, wobei die erste Schicht einen Borcarbid-Gehalt von 100 Volumenprozent, bezogen auf das Gesamtvolumen der Keramikkomponente aufweist und fünf zusätzliche Schichten jeweils Verhältnisse von Borcarbid zu zweiter Keramikkomponente von 90:10, 70:30, 50:50, 30:70 und 10:90 aufweisen.

20. Gehärtetes Cermet nach Anspruch 18 oder Anspruch 19, wobei die zweite Keramikkomponente Titandiborid ist.

## Revendications

1. Procédé de formation d'un cermet durci, comprenant les étapes consistant:
a) à fournir une matière céramique compacte et poreuse comprenant du carbure de bore et un second composant céramique;
b) à remplir au moins partiellement les pores de la matière céramique compacte et poreuse avec un composant métallique en fusion choisi parmi l'aluminium ou un alliage à base d'aluminium pour former une matière céramique compacte remplie de métal;
c) à exposer la matière céramique compacte remplie de métal à une température comprise entre 600°C et 1000°C pendant une durée suffisante pour faire réagir au moins une fraction du composant métallique en fusion et pour former un composant durcissant le cermet, le second composant céramique ne subissant aucune réaction significative avec le métal en fusion à ladite température, les conditions de température de l'étape (c) étant différentes de celles de l'étape (b); et
d) à refroidir la matière céramique compacte remplie de métal et le composant durcissant le cermet à la température ambiante, formant ainsi un cermet durci.

2. Procédé selon la revendication 1, dans lequel le second composant céramique est le carbure de bore qui a subi un traitement thermique à une température supérieure à 1800°C mais inférieure à 2350°C ou le diborure de titane.

3. Procédé selon l'une des revendications 1 ou 2, dans lequel l'étape (b) est réalisée par infiltration sous vide.

4. Procédé selon la revendication 3, dans lequel le composant métallique est l'aluminium, le premier composant céramique est le carbure de bore, le second composant céramique est le dioxyde de titane et l'infiltration sous vide est réalisée à une température comprise entre 1100°C et 1200°C et sous une pression réduite comprise entre 1,3 et 40 pascals (10 et 300 millitorrs).

5. Procédé selon l'une des revendications 1 ou 2, dans lequel l'étape (b) est réalisée par une compaction omnidirectionnelle rapide.

6. Procédé selon la revendication 5, dans lequel le composant métallique est l'aluminium, le premier composant céramique est le carbure de bore, le second composant céramique est le diborure de titane et les conditions de compaction omnidirectionnelle consistent en une température comprise entre 660 et 1200°C, une pression comprise entre 1 MPa et 850 MPa, et une durée de séjour à la pression comprise entre cinq secondes et une heure.

7. Procédé selon l'une des revendications précédentes, dans laquelle l'étape (c) est réalisée dans une atmosphère inerte sous une pression comprise entre 0,10 et 1,01 MPa (1 à 10 atmosphères).

8. Procédé selon l'une des revendications précédentes, dans lequel le composant durcissant le cermet contient AlB₂ et Al₄BC.

9. Procédé selon l'une des revendications précédentes, dans lequel le composant métallique est l'aluminium, le second composant céramique est le diborure de titane, et le rapport volumique carbure de bore/diborure de titane est compris entre 90:10 et 60:40.

10. Procédé selon la revendication 9, dans lequel ledit rapport volumique est compris entre 80:20 et 70:30.

11. Procédé selon l'une des revendications précédentes, dans lequel la quantité du composant métallique est de 5 à 50 pourcent du volume de la matière céramique compacte et poreuse.

12. Procédé selon la revendication 11, dans lequel ladite quantité du métal est de 20 à 50 pourcent en volume.

13. Procédé selon l'une des revendications précédentes, dans lequel la quantité du composant métallique restant dans le cermet durci constitue 3 à 30 pourcent en poids du cermet durci.

14. Procédé selon la revendication 13, dans lequel ladite quantité du métal restant dans le cermet durci est de 5 à 15% en poids.

15. Procédé selon l'une des revendications précédentes, dans lequel la matière céramique compacte et poreuse est un assemblage en couches dans lequel chaque couche à l'intérieur dudit assemblage en couches possède un rapport carbure de bore/second composant céramique qui est différent du rapport dans chaque couche adjacente; et les pores à l'intérieur de chaque couche sont au moins partiellement remplis avec le composant métallique en fusion pour former un assemblage en couches rempli de métal par lequel se forme un stratifié de cermet durci.

16. Cermet durci susceptible d'être obtenu à l'aide d'un procédé tel que défini dans la revendication 1.

17. Cermet durci selon la revendication 16, dans lequel ledit procédé est tel que défini dans l'une des revendications 2 à 15.

18. Stratifié de cermet durci selon la revendication 16, comprenant une première couche de cermet durci et au moins une couche supplémentaire de cermet durci, la première couche contenant du carbure de bore, un composant métallique choisi parmi l'aluminium ou un alliage à base d'aluminium, au moins un produit d'une réaction entre le carbure de bore et le composant métallique et, éventuellement, un second composant céramique, chaque couche supplémentaire contenant le carbure de bore, le second composant céramique, le composant métallique et le produit de réaction, chaque couche à l'intérieur dudit stratifié ayant une certaine quantité de produit de réaction et un rapport carbure de bore/second composant céramique qui diffère de ceux des couches adjacentes.

19. Cermet durci selon la revendication 18, dans lequel la première couche possède une teneur en carbure de bore de 100 pourcent en volume, par rapport au volume total des composants céramiques, et cinq couches supplémentaires possèdent des rapports respectifs carbure de bore/second composant céramique de 90:10, 70:30, 50:50, 30:70 et 10:90.

20. Cermet durci selon l'une des revendications 18 ou 19, dans lequel le second composant céramique est le diborure de titane.
